# FASCICULE DE BREVET EUROPEEN

(11) **EP 4 028 888 B1**
(45) Date de publication et mention de la délivrance du brevet: **11.09.2024**
(21) Numéro de dépôt: 20768358.2
(22) Date de dépôt: 11.09.2020
(51) Int. Cl.: G06F 9/54, G06F 8/71

(54) **PROCÉDÉ DE COMMUNICATION ENTRE DES ENTITÉS LOGICIELLES VIA UNE API**
VERFAHREN ZUR KOMMUNIKATION ZWISCHEN SOFTWAREEINHEITEN ÜBER EINE API
METHOD FOR COMMUNICATING BETWEEN SOFTWARE ENTITIES VIA AN API

(30) Priorité: 12.09.2019 FR 1910071
(43) Date de publication de la demande: 20.07.2022
(73) Titulaire: Sagemcom Broadband SAS, 92270 Bois-Colombes (FR)
(72) Inventeur: NGUYEN DINH HIEN, Michaël Thien Bao, 92500 RUEIL MALMAISON (FR); JAULIN, Jean-Philippe, 92500 RUEIL MALMAISON (FR)
(74) Mandataire: Cabinet Boettcher
(86) Numéro de dépôt international: PCT/EP2020/075532
(87) Numéro de publication internationale: WO 2021/048395

(56) Documents cités:
- EP-A2- 1 845 446
- EMEAKAROHA VINCENT C ET AL: "Towards Automated Cost-Efficient Data Management for Federated Cloud Services", 2016 5TH IEEE INTERNATIONAL CONFERENCE ON CLOUD NETWORKING (CLOUDNET), IEEE, 3 October 2016 (2016-10-03), pages 158 - 163, XP033019077, DOI: 10.1109/CLOUDNET.2016.37

## Description

L'invention concerne le domaine des interfaces de programmation applicatives (API).

### ARRIERE PLAN DE L'INVENTION

Deux entités logicielles, localisées ou non dans un même équipement « physique », peuvent échanger des informations à travers un médium commun via une interface de programmation applicative (API). L'API comprend un ensemble de transactions qui chacune met en oeuvre des échanges de messages.

Chaque message échangé est structuré de manière adaptée au transport de l'information associée au message (description des champs, type des champs, etc.).

Au gré du développement de nouvelles versions des transactions dans les différentes entités logicielles, il est possible que la structure de ces messages évolue en fonction de nouveaux besoins. Ces évolutions sont rarement synchronisées de part et d'autre de la liaison.

Une entité logicielle qui reçoit un message décode ledit message au travers de la description de structure qui a été définie dans sa propre version de la transaction de l'API.

Le type de structure de données considéré ici est un ensemble de champs qui peuvent posséder chacun une valeur. C'est la valeur contenue dans un champ donné qui permet un traitement spécifique suite à l'utilisation de l'API.

Chaque champ est primitivement typé. Cela signifie que chaque champ admet un type de valeur, par exemple un entier, une chaîne de caractères ou une autre structure. On peut considérer qu'un tableau typé est une suite de champs du type donné.

De plus, comme un type peut être utilisé plusieurs fois, la structure est un ensemble ordonné de champs.

On considère aussi que le codage et le décodage des structures de données sont basés uniquement sur leur type qui est décrit entre parenthèses. Cette considération limite le nombre de types possibles et retire la sémantique de chaque champ. Cette considération est à prendre en compte dans la mesure où le nombre de champs différents possibles n'est pas limité.

Ainsi, lorsqu'un message reçu par une entité logicielle a été encodé dans une version de la transaction qui n'est pas implémentée dans l'entité, il en résulte une erreur de communication pouvant aboutir à un message indécodable, ou à une interprétation erronée du message.

Bien sûr, cette problématique se présente principalement lorsque les deux entités logicielles appartiennent à deux équipements distincts susceptibles de connaître des évolutions distinctes.

Par exemple, lorsqu'un premier équipement demande à un deuxième équipement ses caractéristiques, le message mis en oeuvre peut être :
*ID_request,*
et la réponse :
   *ID_answer.*

On considère dans cet exemple que le message *ID_request* requiert seulement en retour une valeur correspondant à *ID.*

Dans cet exemple, on prend l'hypothèse que le deuxième équipement, dans sa version logicielle, encode sa réponse dans une structure constituée de champs typés comme suit :
(entier) *ID*
(chaîne de caractères) *Name*
(entier) *Maxbandwidth*
(entier) *Latency*

Le premier équipement, dans sa version logicielle, attend une structure de type :
(entier) *ID*
(chaîne de caractères) *Name*
(entier) *Latency*

Ainsi, le premier équipement envoie au deuxième équipement la donnée contenant la valeur correspondant à *ID.* Le deuxième équipement, afin de répondre, construit sa réponse avec sa structure, qui comprend donc *ID, Name, Maxbandwidth* et *Latency.* Le deuxième équipement envoie alors sa réponse.

À la réception de la réponse, le premier équipement décode la donnée. Les valeurs associées aux champs *ID* et *Name* correspondent et sont cohérentes. Par contre, le décodage du champ *Latency* est en réalité la valeur du champ *Maxbandwidth* de la structure connue du deuxième équipement. La compréhension du message est par conséquent erronée et peut donc conduire à un mauvais traitement de l'information.

Un certain nombre d'approches ont été envisagées pour garantir la compatibilité des versions de transaction utilisées par les deux entités logicielles.

Il est possible de caractériser chaque version de la transaction par un numéro de version qui est contrôlé au moment de la réception du message par l'autre entité logicielle. Cette solution peut toutefois conduire à des incompatibilités liées à des développements faits de manière non homogène.

Il est aussi possible de signer et de certifier les versions utilisées. Toutefois, deux versions jugées incompatibles ne peuvent pas communiquer, alors même que certains de leurs messages sont compatibles.

On a par ailleurs envisagé de transmettre la description de la structure de chaque message préalablement à la transmission du message lui-même, pour s'assurer de la compatibilité des versions. Cette approche est très lourde du fait du grand nombre de messages au vu de leur usage réel.

Le document US 9,516,130 B1 décrit un procédé de communication entre deux versions d'une transaction d'une API au travers d'un module logiciel supplémentaire de cache qui permet de réordonner les paramètres pour les rendre compatibles entre les entités logicielles. Ce procédé nécessite le développement et l'utilisation du module logiciel supplémentaire de cache et est donc complexe et coûteux à mettre en oeuvre.

Il existe sous *Linux* un bus de communication nommé *uBus* qui permet à des services de proposer des objets structurés et strictement définis. Les données peuvent être demandées ou modifiées au travers d'une requête qui est un message structuré à envoyer. Afin de savoir comment structurer le message pour effectuer la requête, la structure peut être demandée au bus de communication. Selon le retour de cette demande, il est possible d'adapter le traitement par rapport à la description.

Ce mécanisme permet une compatibilité entre les acteurs, mais nécessite d'embarquer un « traducteur » adaptatif de structures de données. De plus, il est nécessaire de charger et d'analyser la description avant de commencer à échanger des données utiles.

EP 1 845 446 A2 divulgue un procédé de communication entre des applications à travers une API qui satisfait des requêtes d'accès par une application demanderesse conformes aux possibilités et au format d'accès publiés de l'application accédée. Cependant, ce document ne divulgue aucun moyen de gérer les problèmes de compatibilité de versions de transactions entre les applications.

### OBJET DE L'INVENTION

L'invention a pour objet d'assurer de manière simple, peu coûteuse et efficace la compatibilité des échanges de messages entre deux entités logicielles communiquant via une API.

### RESUME DE L'INVENTION

En vue de la réalisation de ce but, on propose un procédé de communication entre des entités logicielles via une interface de programmation applicative (API) qui comporte au moins une transaction définies chacune par un ensemble de messages, le procédé de communication comprenant une phase de configuration comportant les étapes, mises en oeuvre dans chaque entité logicielle et pour chaque version de la transaction implémentée par ladite entité logicielle, de :
- produire une description structurelle de la version, qui comporte une structure globale de chaque message pouvant être échangé dans la version de la transaction ;
- produire une signature qui est représentative de la description structurelle de la version ;
- définir et sauvegarder un objet comportant la signature et la description structurelle de la version ;
le procédé de communication comprenant en outre une phase d'émission comportant l'étape de :
- faire émettre, par une entité logicielle émettrice, un message courant d'une version courante de la transaction, ainsi qu'une signature courante de la version courante ; et une phase de réception comprenant les étapes de :
- faire recevoir, par une entité logicielle réceptrice, le message courant et la signature courante ;
- faire identifier, par l'entité logicielle réceptrice, un objet ayant une signature identique à la signature courante, et décoder le message courant en utilisant la description structurelle dudit objet.

Ainsi, l'entité logicielle réceptrice vérifie à la réception du message courant qu'elle implémente bien la version de la transaction utilisée par l'entité logicielle émettrice, et elle utilise la description structurelle de la bonne version pour décoder le message courant.

Le procédé de communication selon l'invention permet donc d'assurer que les messages transmis sont interprétés correctement. Le procédé de communication selon l'invention est simple à mettre en oeuvre, peu coûteux, peu consommateur de bande passante, et ne présente pas les limitations des solutions de l'art antérieur.

On propose aussi un procédé de communications tel que celui qui vient d'être décrit, dans lequel, au cours de la phase de configuration, la signature est obtenue en mettant en oeuvre sur la description structurelle de la version une fonction de hachage qui est identique pour toutes les versions de la transaction.

On propose de plus un procédé de communications tel que celui qui vient d'être décrit, dans lequel la signature courante est transmise à l'entité logicielle réceptrice en étant incluse dans le message courant.

On propose aussi un procédé de communications tel que celui qui vient d'être décrit, dans lequel, au cours de la phase de configuration, chaque entité logicielle stocke les objets dans une table de versions.

On propose en outre un procédé de communications tel que celui qui vient d'être décrit, dans lequel, au cours de la phase de configuration, l'entité logicielle émettrice et l'entité logicielle réceptrice échangent leur table de versions, de sorte que l'entité logicielle émettrice connaît et utilise les versions de la transaction implémentées par l'entité logicielle réceptrice.

On propose aussi un procédé de communications tel que celui qui vient d'être décrit, dans lequel la table de versions de l'entité logicielle émettrice comporte au moins un identifiant de privilège qui identifie une version privilégiée de la transaction, associée à une première entité logicielle réceptrice, que l'entité logicielle émettrice utilise en priorité lorsque l'entité logicielle émettrice communique avec la première entité logicielle réceptrice.

On propose aussi un procédé de communications tel que celui qui vient d'être décrit, dans lequel la table de versions de l'entité logicielle émettrice comporte au moins un identifiant par défaut qui identifie une version par défaut de la transaction, que l'entité logicielle émettrice utilise en priorité lorsque l'entité logicielle émettrice communique avec une deuxième entité logicielle réceptrice qui n'est pas associée à une version privilégiée dans la table de versions de l'entité logicielle émettrice.

On propose de plus un procédé de communications tel que celui qui vient d'être décrit, dans lequel chaque objet comprend, outre la signature et la description structurelle de la version associée audit objet, un indicateur de préférence permettant d'évaluer et de comparer entre elles plusieurs versions pour sélectionner une version optimisée permettant d'optimiser des performances de la communication.

On propose aussi un procédé de communications tel que celui qui vient d'être décrit, dans lequel la phase de configuration comprend une étape au cours de laquelle la fonction de hachage est négociée entre les entités logicielles.

On propose en outre un procédé de communications tel que celui qui vient d'être décrit, dans lequel la phase de configuration comprend l'étape de définir un ensemble fini de types de base destinés à définir les structures globales des messages, et à associer un identifiant de type à chaque type de base, de sorte que la représentation structurelle de chaque version comporte une chaîne desdits identifiants de type.

On propose aussi un procédé de communications tel que celui qui vient d'être décrit, dans lequel chaque identifiant de type est un caractère distinct.

On propose aussi un procédé de communications tel que celui qui vient d'être décrit, dans lequel la structure globale d'au moins un message comprend au moins une structure de données imbriquées.

On propose de plus un procédé de communications tel que celui qui vient d'être décrit, dans lequel l'ensemble fini de types de base comprend au moins un type de base destiné à délimiter la structure de données imbriquées.

On propose de plus un équipement comportant une entité logicielle agencée pour communiquer via une interface de programmation applicative (API) qui comporte au moins une transaction, l'entité logicielle comprenant une table de versions produite par la mise en oeuvre des étapes de la phase de configuration du procédé de communication selon l'une des revendications précédentes, l'entité logicielle étant en outre agencée pour mettre en oeuvre la phase d'émission et/ou la phase de réception du procédé de communications tel que celui qui vient d'être décrit.

On propose en outre un programme d'ordinateur comprenant des instructions qui conduisent l'équipement ci-dessus à exécuter la phase de configuration, ainsi que la phase d'émission et/ou la phase de réception du procédé de communication décrit.

On propose aussi un support d'enregistrement lisible par ordinateur, sur lequel est enregistré le programme d'ordinateur qui vient d'être décrit.

L'invention sera mieux comprise à la lumière de la description qui suit d'un mode de mise en oeuvre particulier non limitatif de l'invention.

### BREVE DESCRIPTION DES DESSINS

Il sera fait référence au dessin annexé suivant :
[Fig. 1] la figure 1 représente un tableau qui associe des types de base et des caractères ;
[Fig. 2] la figure 2 représente un message initiateur d'une transaction ;
[Fig. 3] la figure 3 représente un message de réponse de la transaction ;
[Fig. 4] la figure 4 représente une table de versions d'une entité logicielle ;
[Fig. 5] la figure 5 représente une table de versions d'une entité logicielle émettrice qui communique avec une entité logicielle réceptrice ;
[Fig. 6] la figure 6 représente une table de versions de l'entité logicielle réceptrice ;
[Fig. 7] la figure 7 représente le dialogue entre l'entité logicielle émettrice et l'entité logicielle réceptrice ;
[Fig. 8] la figure 8 représente la table de versions mise à jour de l'entité logicielle réceptrice ;
[Fig. 9] la figure 9 représente un dialogue entre deux entités logicielles émettrices et une entité logicielle réceptrice ;
[Fig. 10] la figure 10 représente la table de versions mise à jour de l'une des deux entités logicielles émettrices.

### DESCRIPTION DETAILLEE DE L'INVENTION

Le procédé de communication selon l'invention permet à des entités logicielles de communiquer entre elles à travers un medium commun via une API. Chaque entité logicielle est possiblement, mais pas nécessairement, intégrée dans un équipement distinct.

La forme de l'API est définie comme suit. L'API comporte une pluralité de transactions définies chacune par un ensemble de messages. On distingue parmi les messages des « messages initiateurs », ou « requêtes », qui peuvent éventuellement être associés à d'autres messages, que l'on nomme alors « messages de réponse ». L'ordre et le type de message est important et définit la transaction.

Chaque message est lui-même constitué de données. Ces données sont structurées, c'est à dire qu'elles forment un ensemble constitué de champs.

L'usage du médium commun requiert une transformation de la structure de données à l'envoi, que l'on nomme « codage », ainsi que la transformation inverse, que l'on nomme « décodage ». Chaque champ de la structure de données est typé afin de pouvoir être codé et décodé lors de la transmission du message d'une entité logicielle à une autre au moyen de ce médium commun.

Le type d'un champ est un élément d'un ensemble qui permet de définir la manière de coder et de décoder. Un médium commun (une *socket* réseau ou une file (*pipe*)) ne prend généralement en compte qu'une suite d'octets (*buffer*)*.* Une manière de coder une information est de définir une structure de données simple, comme un TLV (pour « Type, Longueur, Valeur »). Le codage consiste alors à assigner une valeur sur un nombre d'octets prédéfini (par exemple 1) pour le Type, de considérer la Longueur de l'information sur un nombre d'octets prédéfini (par exemple 1), et de mettre la Valeur comme étant une suite d'octets. Le codage suit l'ordre de la structure de données à envoyer. Le décodage se base sur les points prédéfinis afin de parcourir la suite d'octets et d'assigner chaque Valeur découverte à un champ de la structure. Le Type et la Longueur permettent de savoir comment la partie Valeur est à extraire.

Au niveau de la transmission de la structure de données, la sémantique de l'information n'est pas conservée, mais elle doit être connue des deux entités logicielles.

Chaque entité logicielle met possiblement en oeuvre plusieurs versions de chaque transaction. Ces versions peuvent être différentes entre les entités logicielles, ce qui peut conduire à une interprétation erronée des messages.

Le procédé de communication selon l'invention comprend tout d'abord une phase de configuration, mise en oeuvre dans chaque entité logicielle lors de l'instanciation de l'API, et pour chaque version de chaque transaction implémentée par ladite entité logicielle. On note qu'il est possible de réinstancier une API avec une gestion de nouvelles versions de l'API : la phase de configuration est alors mise en oeuvre à nouveau.

Cette phase de configuration consiste tout d'abord à produire une description structurelle de chaque version de la transaction implémentée par l'entité logicielle. La description structurelle comporte une structure globale de chaque message pouvant être échangé dans la version de la transaction.

Pour définir la structure globale d'un message, on définit tout d'abord un ensemble fini de types de base.

L'ensemble fini de types de base permet de décrire fondamentalement la manière dont sont représentées les données de manière atomique.

Cela implique par exemple qu'un entier signé sur 32 bits est une description partagée par tous les équipements, et donc que le nom du type de base est explicite sur la compréhension basique de l'information.

Un type de base peut représenter un objet plus particulier, par exemple une adresse MAC. Il est possible de représenter cette adresse MAC avec une succession de 6 entiers non signés sur 8 bits, mais l'ordre et la cohérence de cette série d'entiers non signés sur 8 bits est nécessaire pour la définition d'une adresse MAC.

Il est donc possible d'ajouter un tel type de base dans l'ensemble fini de types de base utilisé pour la description de la structure globale.

La description de la structure globale d'un message est donc une suite d'éléments de cet ensemble fini de types de base.

On associe un identifiant de type à chaque type de base de l'ensemble fini de types de base. Chaque identifiant de type est ici un caractère distinct.

Il est nécessaire que cette correspondance soit la même pour toutes les entités logicielles (et tous les équipements) utilisant l'API, car elle sert de référence dans la cohérence de la description de la structure globale des messages.

De plus, cette correspondance doit être bijective, dans la mesure où l'un permet de prendre les mêmes suites de décisions que l'autre.

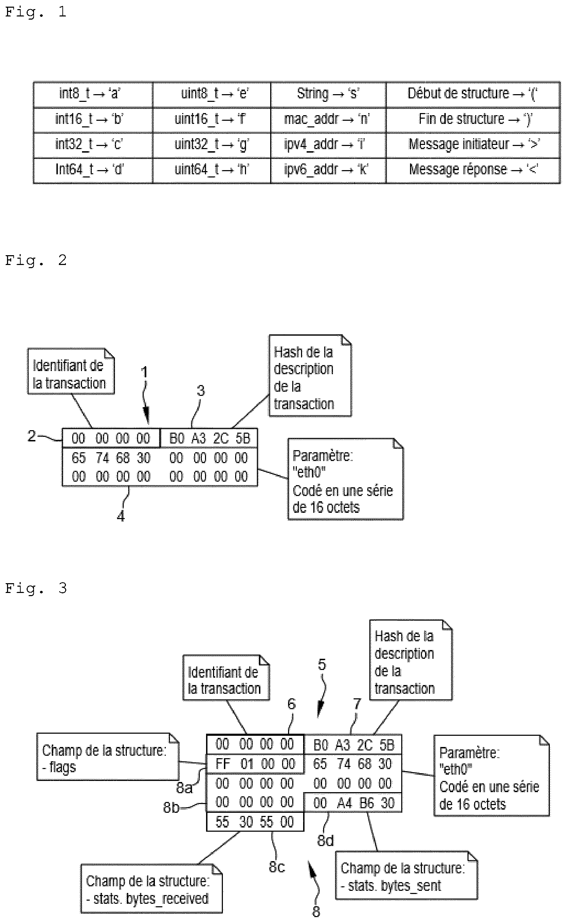

Par exemple, comme cela est visible dans le tableau de la figure 1, un entier signé sur 16 bits, soit 2 octets (int16_t), est représenté par le caractère 'b'. Un entier signé sur 32 bits est représenté par le caractère `c'. Un entier non signé sur 64 bits, soit 8 octets (uint64_t), est représenté par le caractère `h'. Une adresse IPv4 est représentée par le caractère `i'.

Les types de base appelés « message initiateur » ou « message de réponse » permettent de préciser que le message qui suit a pour objectif d'être émis à l'initiation d'une transaction, ou d'être utilisé en réponse lors de la transaction.

La structure globale de chaque message comprend une structure de données.

Les types de base appelés « début de structure » et « fin de structure » permettent de caractériser la composition d'une structure de données. Ces types de base sont utiles pour définir des structures de données imbriquées.

Par exemple, la structure de données *str1* ci-dessous, codée en langage C, contient 3 entiers non signés dont les deux premiers sont sur 8 bits et le dernier sur 32 bits :

```
     struct str1 {
          int8_t val1;
          int8_t val2;
          int32_t val3;
     };
```

En utilisant le tableau de la figure 1, on représente cette structure de données *str1* par la chaîne de caractères :
str1_proto → "(" "a" "a" "c" ")"

La structure globale de chaque message peut aussi comprendre une structure de données imbriquées.

La structure de données str2 ci-dessous est une structure de données imbriquées :

```
     struct str2 {
          int8 val1;
          struct str1 val2;
          int16 val3;
     };
```

Cette structure de données imbriquées str2 contient un premier entier signé sur 8 bits, la structure de données *str1* présentée précédemment, ainsi qu'un second entier signé sur 16 bits.

On a donc :

```
     str1_proto → "(""a""a""c"")"
     str2_proto → "(" "a" str1_proto "b" ")"
```

La structure de données imbriquées str2 est donc représentée par la chaîne de caractères finale suivante :
str2_proto → "(" "a" "(""a""a""c"")" "b" ")"

Bien sûr, une structure de données imbriquées ne doit pas être confondue avec une structure de données qui possède la même suite de champs.

Il est aussi possible d'ajouter des caractères de description qui indiquent quel message particulier de la transaction de l'API est représenté.

On considère ainsi l'ajout d'un type de base (et donc d'un caractère associé) qui englobe une structure de données lors de l'envoi d'une requête, et un autre type de base (et donc de caractère) qui englobe une structure de données lors de la réponse.

Une transaction plus complexe, c'est-à-dire avec plus d'étapes, peut aussi être introduite et décrite de cette manière.

Une fois que l'ensemble des types de base (incluant des délimitations de structure et éventuellement d'autres marqueurs de l'API) a été défini, on concatène une chaîne de caractères comprenant, pour chaque message de la version de la transaction, une suite de caractères ordonnés décrivant la structure globale du message.

Cette chaîne de caractères forme la description structurelle de la version de la transaction, qui décrit alors complètement la version de la transaction de l'API et la manière dont doit être codé et décodé un échange de messages. La chaîne de caractères est de taille variable : sa taille sera importante si la structure de la transaction l'est aussi.

On décrit maintenant un exemple de la description structurelle d'une version d'une transaction en format XML.

Cette transaction est nommée *getInterface.*

La transaction utilise un message initiateur qui est appelé via la méthode *transaction_send_getInterface* comprenant un paramètre de type *'string',* une chaîne de caractères d'une taille maximale de 16 octets.

La transaction est complétée par un message de réponse *transaction_answer_getInterface* composé d'une structure de données imbriquées nommée *interface.* Cette structure est composée de 3 champs : *flags, name* et *stats.* Le type du champ *flag* est un entier non signé sur 32 bits. Le champ *name* est de type *'string'* d'une taille de 16 octets. Le champ *stats* est une structure de type *stats.* Cette dernière est composée de deux champs *bytes_sent* et *bytes_received.* Ces deux champs sont de type entier non signé sur 32 bits.

On utilise donc la structure de données *stats* et la structure de données imbriquées *interface* suivantes :

```
     Struct stats {
         uint32_t bytes_sent ;
         uint32_t bytes_received ;
     } ;
     struct interface {
         uint32_t flags ;
          string name[16] ;
          struct stats stats ;
     } ;
```

Et on définit les messages suivants :
transaction_send_getInterface (string name[16])
transaction_answer_getInterface (struct interface)

La chaîne de caractères utilisée pour former la description structurelle de la version de la transaction est donc :

```
     STATS_STRUCT -> "(" "g" "g" ")"
     INTERFACE_STRUCT -> "(" "g" "s" "{16}" STATS_STRUCT
 ")"
     GETINTERFACE_CMD -> ">" "s" "{16}" "<"
 INTERFACE_STRUCT
```

On produit alors une signature qui est représentative de la description structurelle de la version de la transaction. Pour cela, on met ici en oeuvre une fonction de hachage sur la description structurelle de la version de la transaction. La fonction de hachage utilisée est la même pour toutes les versions de toutes les transactions, et pour toutes les entités logicielles qui communiquent via l'API.

On obtient ainsi, pour chacune des versions, correspondant à autant de structures et donc de méthodes de codage et de décodage, une signature de la description structurelle de ladite version.

La fonction de hachage permet de réduire la quantité d'informations à envoyer pour identifier la description structurelle de la version de la transaction.

Toute fonction de hachage peut être utilisée. La fonction de hachage est partagée ou négociée entre les entités logicielles qui communiquent via l'API afin de pouvoir identifier la même chose.

Il est par exemple possible d'utiliser les méthodes *MD5* ou *SHA512* pour procéder au hachage. Pour une signature (ou *hash*) de plus petite taille, on peut également utiliser par exemple la méthode *FNV*-1a qui permet de construire une signature sur 32 bits à partir d'une suite d'octets ou d'une chaîne de caractères.

Selon les fonctions de hachage utilisées, on obtient les valeurs suivantes (nombres en hexadécimal) pour la transaction décrite plus tôt :
FNV-1a : 5b2ca3b0
MD5 : 406280ce3c01afe232e99cb6f3bdf746
SHA512 : 7a63f225590dcdlcf95cbca934a035c719a2bdfe3bed2d7e0dada3603 9c4804ede4ef22f95571a699cce1065aae362a9127b16d1ea866dc26a 4c5e62a3011705

La construction d'un message qui peut être transmis sur un médium est une série d'octets.

En dehors des en-têtes éventuellement utilisés pour communiquer sur le médium, le message initiateur lui-même peut être codé de la manière suivante :
GET_INTERFACE 5b2ca3b0 « eth0 »

On voit sur la figure 2 un message initiateur 1. Le message initiateur 1 est représenté sous la forme d'une suite de nombres hexadécimaux correspondant à une suite d'octets après un codage utilisé pour être transmis sur le médium.

Le message initiateur 1, appelé via la méthode *transaction_send_getInterface,* comprend successivement un identifiant 2 de la transaction, la signature 3 de la version de la transaction, et une information à transmettre 4 qui est le paramètre « eth 0 ».

L'identifiant de la transaction est codé par un entier sur 32 bits, qui est dans cet exemple égal à zéro.

La signature 3 de la version de la transaction est codée pour être transmise sur un réseau de type IP (octet de poids le plus fort en premier).

Le paramètre correspondant à l'information à transmettre 4 suit l'identifiant et la signature 3. Le paramètre est une chaîne de caractères simples, chaque caractère étant simplement ajouté dans sa représentation en octet. Une série de zéros complète le paramètre qui a été décrit comme étant de taille 16.

De même, en référence à la figure 3, le message réponse 5 comprend successivement l'identifiant 6 de la transaction, c'est-à-dire zéro, la signature 7, et une information à transmettre 8.

L'information à transmettre 8 comprend l'ensemble de la structure de données imbriquées, c'est-à-dire le champ flags 8a, le paramètre « *eth* 0 » 8b, le champ « *bytes_sent* » 8c de la sous-structure stats et le champ « *bytes_received* » 8d de la structure *stats.*

La sous-structure « *stats* », composée de deux entiers non signés sur 32 bits, est donc juxtaposée afin de terminer le contenu du message.

Chaque entité logicielle produit alors, pour chaque version d'une transaction de l'API, un objet qui représente la version et qui comprend un identifiant de la transaction, la signature précédemment calculée, ainsi que la description structurelle de la version qui contient les méthodes de codage et de décodage des messages associés et qui permet donc de transmettre l'information à travers un médium commun.

L'entité logicielle sauvegarde alors tous les objets dans une table de versions.

Avantageusement, on ajoute dans chaque objet un indicateur de préférence qui permet d'évaluer et de comparer entre elles plusieurs versions pour sélectionner une version optimisée permettant d'optimiser les performances de la communication.

L'indicateur de préférence permet de préciser d'avantage la logique de sélection de la version de la transaction à utiliser selon le cas d'usage.

L'indicateur de préférence montre par exemple un nombre plus ou moins important de paramètres transmissibles, ou encore la date de mise en place de la version.

Cet indicateur de préférence complémentaire permet, en cas de compatibilité de multiples versions de la transaction de part et d'autre, d'effectuer une sélection de la version de la transaction la plus adaptée au message à transmettre.

L'indicateur de préférence permet par exemple de sélectionner la version occupant le moins d'espace sur le médium.

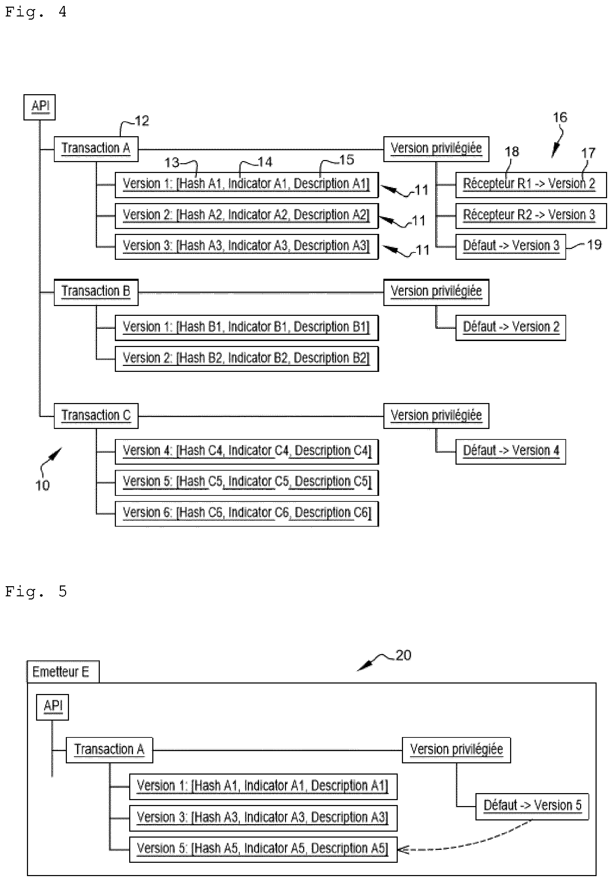

On illustre ce qui vient d'être dit grâce à l'exemple de la figure 4.

L'arborescence de la figure 4 est une table de versions 10 d'une entité logicielle émettrice. On voit que l'API comprend une première transaction A, une deuxième transaction B et une troisième transaction C.

L'entité logicielle émettrice en question implémente une version 1, une version 2 et une version 3 de la transaction A, une version 1 et une version 2 de la transaction B, et une version 4, une version 5 et une version 6 de la transaction C.

On constate que le nombre de versions implémentées pour une transaction donnée n'est pas nécessairement le même pour chaque transaction. Par exemple, la transaction B ne contient que deux versions : la version 1 et la version 2.

Chaque objet 11 associé à une version d'une transaction comprend l'identifiant 12 de la transaction, la signature 13 de la version (ou *hash*), et la description structurelle 14 de la version permettant de coder ou de décoder les messages.

Chaque objet comprend aussi un indicateur de préférence 15.

À chaque transaction est aussi associée une table de versions privilégiées 16.

La table de versions privilégiées 16 comporte, pour la transaction A, deux identifiants de privilège. Chaque identifiant de privilège identifie une version privilégiée 17 de la transaction A, associée à une première entité logicielle réceptrice 18, que l'entité logicielle émettrice utilise en priorité lorsque l'entité logicielle émettrice communique avec ladite première entité logicielle réceptrice.

Ici, pour la transaction A, l'entité logicielle réceptrice R1 et l'entité logicielle réceptrice R2 sont des « premières entités logicielles réceptrices ». La version 2 est la version privilégiée pour l'entité logicielle réceptrice R1 et la version 3 est la version privilégiée pour l'entité logicielle réceptrice R2.

La table de versions privilégiées 16 comporte de plus, pour chaque transaction, un identifiant par défaut qui identifie une version par défaut 19 de la transaction, que l'entité logicielle émettrice utilise en priorité lorsque l'entité logicielle émettrice communique avec une deuxième entité logicielle réceptrice qui n'est pas associée à une version privilégiée dans la table de versions 10 de l'entité logicielle émettrice.

Ainsi, pour la transaction A, la version par défaut 19 est la version 3 pour toutes les entités logicielles réceptrices (qui sont des « deuxièmes entités logicielles réceptrices ») autres que les entités logicielles réceptrices R1 et R2.

Pour la transaction B, il n'y a pas de version privilégiée qui dépend d'une entité logicielle réceptrice et la version par défaut est la version 2 (pour toutes les entités logicielles réceptrices qui sont donc toutes des « deuxièmes entités logicielles réceptrices »). Pour la transaction C, il n'y a pas de version privilégiée qui dépend de l'entité logicielle réceptrice et la version par défaut est la version 4 (pour toutes les entités logicielles réceptrices qui sont donc toutes des « deuxièmes entités logicielles réceptrices »).

Cette association entre une entité logicielle réceptrice et une version privilégiée peut être déterminée après avoir réussi une transmission, auquel cas il est possible de confirmer la version à utiliser, ou suite à un échange préalable de la table des versions de l'API avec les différentes entités logicielles réceptrices.

On voit donc que la version privilégiée d'une transaction n'est pas nécessairement la dernière version de la liste des versions de cette transaction.

On voit aussi que la transaction C contient les versions 4, 5 et 6. Cela peut montrer par exemple que les versions 1 à 3 peuvent être considérées obsolètes.

De cette manière, il est possible de mettre à jour de manière itérative une API, mais aussi de déprécier certaines de ses versions en ajoutant ou en retirant des entrées de la table.

On décrit maintenant les phases de transmission et les phases de réception de messages, qui font suite à la phase de configuration.

L'entité logicielle émettrice émet un message courant d'une version courante d'une transaction.

Le message courant à transmettre sur le médium peut donc être construit comme il a été montré précédemment, en mettant strictement à la suite les éléments suivants :
- identifiant du message courant (identifiant de la transaction),
- signature de la représentation structurelle de la version de la transaction correspondant à l'entrée dans la table ;
- information à transmettre codée du message courant, c'est-à-dire contenu du message courant, codé par la description structurelle.

L'entité logicielle réceptrice reçoit le message courant en récupérant les éléments dans leur ordre d'arrivée pour en extraire :
- identifiant du message courant (identifiant de la transaction),
- signature de la représentation structurelle,
- information à transmettre codée.

L'entité logicielle réceptrice identifie dans sa table de versions la transaction ainsi qu'un objet ayant une signature identique à la signature courante.

Si une correspondance a été trouvée, l'entité logicielle réceptrice destinataire peut procéder au décodage du message courant en utilisant la description structurelle de l'objet en question, puis faire remonter l'information dans l'application afin d'être traitée.

La partie applicative du programme peut être spécifique à une version du message à traiter.

Au contraire, si aucune correspondance n'est trouvée, le message ne peut pas être traité.

On note ici qu'une entité logicielle n'est bien sûr pas obligatoirement soit uniquement émettrice, soit uniquement réceptrice, mais peut être à la fois émettrice et réceptrice : une transaction peut être effectuée dans les deux sens.

Ainsi, pour une entité logicielle donnée, la même table de versions peut être créée et utilisée pour effectuer les choix d'envoi et de traitement à la réception.

En référence aux figures 5, 6 et 7, on décrit un exemple de mise en oeuvre du procédé de communication selon l'invention par une entité logicielle émettrice et une entité logicielle réceptrice qui partagent l'implémentation d'une API contenant la transaction A.

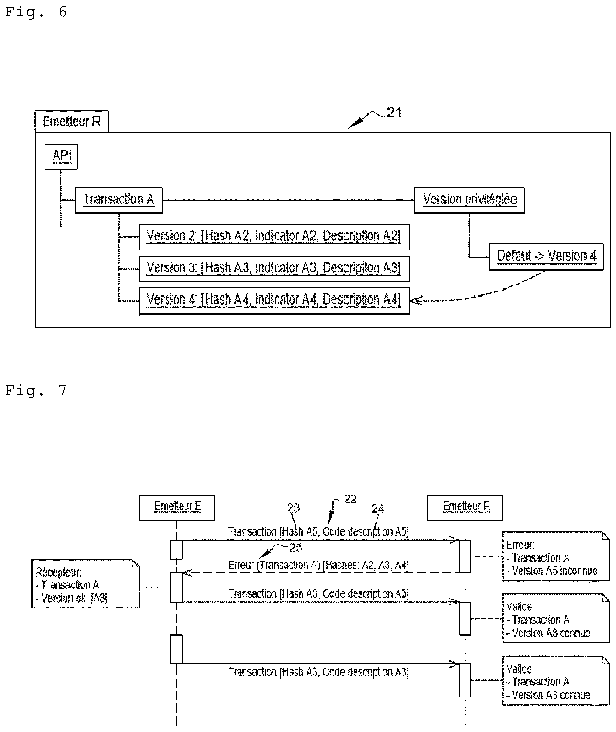

La table de versions 20 de l'entité logicielle émettrice E est visible sur la figure 5. La table de versions 21 de l'entité logicielle réceptrice R est visible sur la figure 6.

L'entité logicielle émettrice E implémente les versions 1, 3 et 5 de la transaction A. La version par défaut, pour la transaction A, est la version 5. La version 5 sera donc utilisée par défaut à la première tentative de transmission de cette transaction.

La table de versions 21 de l'entité logicielle réceptrice R est visible sur la figure 6.

L'entité logicielle réceptrice R implémente les versions 2, 3 et 4 de la transaction A. La version par défaut, pour la transaction A, est la version 4.

On voit sur la figure 7 que l'entité logicielle émettrice E débute la transaction avec un message initiateur 22 contenant la signature 23 de la version A5, ainsi que la description structurelle 24 de la version A5.

L'entité logicielle réceptrice R ne trouve pas d'objet ayant la signature de la version A5 concernant la transaction A dans sa table de versions. L'entité logicielle réceptrice R envoie donc un message d'erreur 25 à l'entité logicielle émettrice E stipulant que l'entité logicielle réceptrice R peut comprendre le message initiateur uniquement avec une signature correspondant à la version A2, la version A3 ou A4.

À la réception du message d'erreur 25 concernant la transaction A, l'entité logicielle émettrice E détermine l'intersection des deux ensembles de signatures possibles entre les deux listes des signatures des versions de la transaction A qu'elle possède, c'est-à-dire la liste de sa table de versions et la liste de la table de versions de l'entité logicielle réceptrice R.

La version 3 dont la signature A3 est présente dans les deux listes est trouvée. Elle peut donc être utilisée pour effectuer la transaction A avec l'entité logicielle réceptrice R. L'entité logicielle émettrice E peut sauvegarder l'information selon laquelle la version de la transaction correspondant à la signature A3 est à utiliser pour communiquer avec l'entité logicielle réceptrice R.

Ainsi, la prochaine tentative de communication de l'entité logicielle émettrice E vers l'entité logicielle réceptrice R peut utiliser directement la bonne version de la transaction.

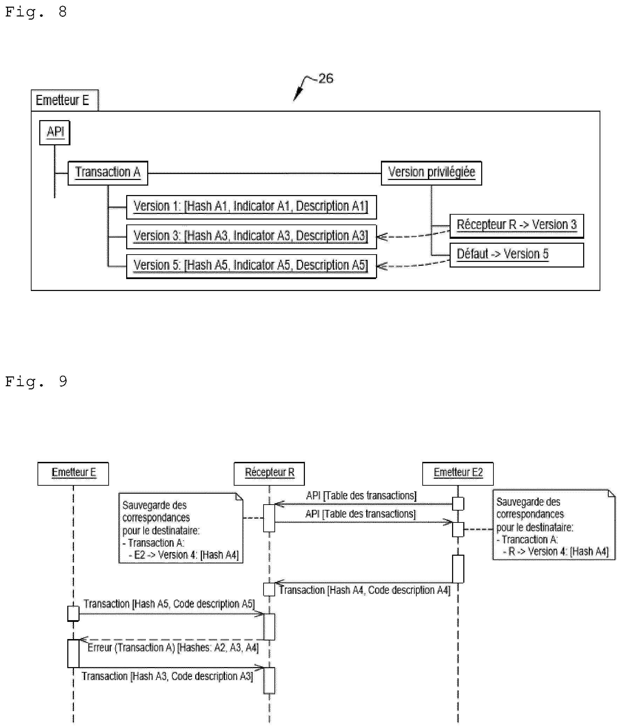

En référence à la figure 8, l'entité logicielle émettrice E met alors à jour sa table de versions 26.

L'entité logicielle émettrice E peut ainsi prendre en compte le fait qu'initier une transaction A avec l'entité logicielle réceptrice R requiert l'usage de la version 3 de la transaction A.

On note que si l'intersection des deux listes de signatures comporte plusieurs éléments, l'entité logicielle émettrice peut choisir la version optimisée de la transaction la plus adaptée au transport de l'information qu'elle souhaite faire transiter (taille, sous ensemble de paramètres, etc.). Ce choix est réalisé grâce à l'indicateur de préférence.

On s'intéresse maintenant plus particulièrement au cas où un message ne peut pas être traité, car la table de versions de l'entité logicielle réceptrice ne contient aucun objet dont la signature correspond à celle dudit message.

Il est possible d'appliquer des actions selon les décisions nécessaires à prendre.

Il peut être envisagé d'ignorer simplement le message.

L'entité logicielle émettrice ne sera alors pas au courant que sa requête n'est pas traitée.

Cela peut poser un problème si une réponse ou une transaction plus complexe est attendue, l'entité logicielle émettrice attendant alors indéfiniment.

Cependant, si la transaction se résume à ce seul message, ignorer un message qu'il n'est pas possible de traiter est une action valable.

L'entité logicielle réceptrice peut aussi répondre par un message d'erreur montrant que le message ne peut pas être interprété (c'est le cas de la figure 7). Il est alors possible d'ajouter des informations au signal d'erreur retourné.

On peut par exemple rajouter au message d'erreur la seule raison de l'erreur : le message ne peut pas être traité (e.g. BAD API VERSION).

On peut aussi par exemple ajouter au message d'erreur une ou plusieurs signatures correspondant aux versions de la transaction qui peuvent être gérées : c'est le cas de la figure 7.

Cette ou ces signatures sont celles de la table de versions de l'entité logicielle réceptrice dont le nom de la transaction correspond au nom de la transaction reçue.

Il peut aussi également être envisagé de compléter le message d'erreur avec les indicateurs de préférence optionnels correspondant auxdites signatures pour permettre à l'entité logicielle émettrice d'effectuer une sélection de la version à utiliser pour un nouvel essai de transmission.

Cela peut permettre à l'entité logicielle émettrice de tenter une nouvelle transaction avec une autre version de la transaction pour laquelle au moins une des signatures reçues en retour d'erreur correspondrait à une entrée dans sa table de versions. Dans le cas où plusieurs versions concorderaient, il peut être avantageux de baser la sélection de la version en fonction de l'indicateur de préférence présent optionnellement dans la table de versions de l'entité logicielle émettrice et en fonction de ceux associés aux signatures du message de retour d'erreur.

Dans le cas où aucune des signatures reçues en retour d'erreur ne correspondrait à une entrée dans la table de versions de l'entité logicielle émettrice, il y a une incompatibilité complète entre les versions de la transaction côté entité logicielle émettrice et côté entité logicielle réceptrice pour cette transaction. La transaction devra donc être interrompue.

Dans une variante de l'invention, il est possible de partager la table de versions au cours de la phase de configuration, lors de la connexion entre deux entités logicielles qui souhaitent communiquer via cette API. Cet échange peut donc être une phase préalable de synchronisation entre les deux entités logicielles, et la connaissance par chaque entité logicielle de la table de versions de l'autre entité logicielle peut permettre de savoir à l'avance quelles versions de chaque transaction peuvent être utilisées.

L'indicateur de préférence permet de préciser d'avantage la logique de sélection de la version de la transaction à utiliser selon le cas d'usage.

Dans la mesure où l'information de la compatibilité de chaque transaction de l'API est connue de toutes les entités logicielles qui communiquent via cette API, il est alors possible de se passer de la gestion d'erreur, ce qui simplifie ainsi les logiques à implémenter pour les gérer.

Ce point apporte de fait un avantage dans la mesure où les deux entités logicielles qui communiquent sont en accord avant que des transactions soient effectuées.

D'autre part, en considérant que la sélection d'une version de chaque transaction est unique et prédictible, par exemple par un algorithme qui permet de prendre la décision de sélectionner une unique version compatible et répondant aux besoins des cas d'usage en s'appuyant sur l'indicateur de préférence de chaque version de la transaction, il est alors possible de ne pas envoyer la signature de la description structurelle dans le message.

En effet, cette information sera déjà connue de chaque entité logicielle pour une transaction donnée. Cela réduit ainsi la taille des données à transmettre sur le médium, mais aussi simplifie la gestion du décodage du message car il devient inutile de chercher la correspondance de la signature : elle a en effet été négociée au préalable, de sorte qu'il n'existe plus d'ambiguïté.

Il est à noter que l'échange de la table de versions avec les informations (signature de la description structurelle, indicateur de préférence) de son utilisation pour chacune de leurs versions respectives n'est pas incompatible avec l'usage de la signature de la description d'une version spécifique lors d'une transmission. Les différents mécanismes peuvent donc être utilisés selon les cas d'usage pour ainsi profiter de leurs avantages respectifs (simplicité d'implémentation, couverture des cas d'usage, rapidité d'exécution, etc.) par rapport à l'entité logicielle qui l'utilise.

Par exemple, une entité logicielle qui gère un service peut implémenter les différents mécanismes afin de pouvoir traiter tous les cas.

Cependant, un utilisateur ponctuel de ce service peut implémenter uniquement la transmission d'une transaction dans une version donnée en employant la signature de la version de la structure de données à échanger.

Au contraire, un gestionnaire de service peut prendre avantage d'une négociation préalable de la compatibilité des transactions de l'API utilisée afin de pouvoir échanger des messages de manière plus efficace du fait de ne pas avoir à implémenter la gestion d'erreur de non-correspondance des transactions et de s'assurer par avance que les transactions pourront aboutir, ou ne jamais aboutir.

En référence à la figure 9, l'interopérabilité des deux mécanismes de gestion des versions des transactions est mise en oeuvre au niveau de l'entité logicielle réceptrice R. L'entité logicielle émettrice E2 échange avec l'entité logicielle réceptrice R la table des transactions ainsi que différentes signatures correspondant aux versions implémentées de la transaction A. Le résultat de cet échange permet à l'entité logicielle émettrice E2 de sélectionner la version 4 correspondant à la signature A4.

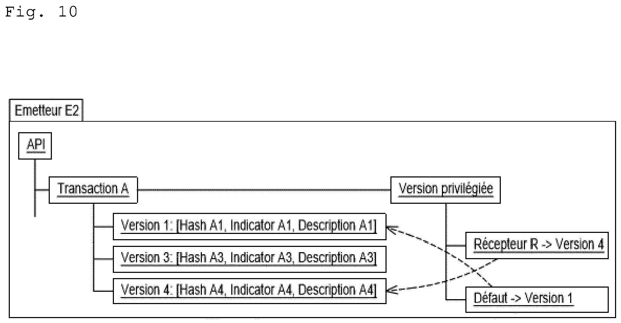

Puis, en référence à la figure 10, l'entité logicielle émettrice E2 peut directement utiliser la version 4 de la transaction A pour initier l'échange de message, sachant que l'entité logicielle réceptrice R saura l'interpréter.

En parallèle, l'entité logicielle réceptrice R peut toujours traiter les demandes ponctuelles de l'entité logicielle émettrice E. Cette dernière ne synchronise pas sa table de versions correspondant à l'API, et tente de transmettre la transaction A avec la version 5. La gestion d'erreur concernant l'usage de la mauvaise version de la transaction permet malgré tout à l'entité logicielle émettrice E de retransmettre la transaction A avec la version 3 qui est compatible avec l'entité logicielle émettrice E et l'entité logicielle réceptrice R.

## Revendications

1. Procédé de communication entre des entités logicielles via une interface de programmation applicative, qui comporte au moins une transaction (12) définies chacune par un ensemble de messages, le procédé de communication comprenant une phase de configuration comportant les étapes, mises en œuvre dans chaque entité logicielle et pour chaque version de la transaction implémentée par ladite entité logicielle, de :
- produire une description structurelle (14) de la version, qui comporte une structure globale de chaque message pouvant être échangé dans la version de la transaction ;
- produire une signature (13) qui est représentative de la description structurelle de la version ;
- définir et sauvegarder un objet (11) comportant la signature (13) et la description structurelle (14) de la version ;
le procédé de communication comprenant en outre une phase d'émission comportant l'étape de :
- faire émettre, par une entité logicielle émettrice (E), un message courant d'une version courante de la transaction, ainsi qu'une signature courante de la version courante ;
et une phase de réception comprenant les étapes de :
- faire recevoir, par une entité logicielle réceptrice (R), le message courant et la signature courante ;
- faire identifier, par l'entité logicielle réceptrice, un objet ayant une signature identique à la signature courante, et décoder le message courant en utilisant la description structurelle dudit objet.

2. Procédé de communication selon la revendication 1, dans lequel, au cours de la phase de configuration, la signature est obtenue en mettant en œuvre sur la description structurelle de la version une fonction de hachage qui est identique pour toutes les versions de la transaction.

3. Procédé de communication selon la revendication 1, dans lequel la signature courante est transmise à l'entité logicielle réceptrice en étant incluse dans le message courant.

4. Procédé de communication selon la revendication 1, dans lequel, au cours de la phase de configuration, chaque entité logicielle stocke les objets dans une table de versions (10).

5. Procédé de communication selon la revendication 4, dans lequel, au cours de la phase de configuration, l'entité logicielle émettrice (E) et l'entité logicielle réceptrice (R) échangent leur table de versions (10), de sorte que l'entité logicielle émettrice connaît et utilise les versions de la transaction implémentées par l'entité logicielle réceptrice.

6. Procédé de communication selon la revendication 4, dans lequel la table de versions (10) de l'entité logicielle émettrice comporte au moins un identifiant de privilège qui identifie une version privilégiée (17) de la transaction, associée à une première entité logicielle réceptrice (18), que l'entité logicielle émettrice utilise en priorité lorsque l'entité logicielle émettrice communique avec la première entité logicielle réceptrice.

7. Procédé de communication selon la revendication 6, dans lequel la table de versions de l'entité logicielle émettrice comporte au moins un identifiant par défaut qui identifie une version par défaut (19) de la transaction, que l'entité logicielle émettrice utilise en priorité lorsque l'entité logicielle émettrice communique avec une deuxième entité logicielle réceptrice qui n'est pas associée à une version privilégiée dans la table de versions de l'entité logicielle émettrice.

8. Procédé de communication selon l'une des revendications précédentes, dans lequel chaque objet (11) comprend, outre la signature et la description structurelle de la version associée audit objet, un indicateur de préférence (15) permettant d'évaluer et de comparer entre elles plusieurs versions pour sélectionner une version optimisée permettant d'optimiser des performances de la communication.

9. Procédé de communication selon la revendication 2, dans lequel la phase de configuration comprend une étape au cours de laquelle la fonction de hachage est négociée entre les entités logicielles.

10. Procédé de communication selon l'une des revendications précédentes, dans lequel la phase de configuration comprend l'étape de définir un ensemble fini de types de base destinés à définir les structures globales des messages, et à associer un identifiant de type à chaque type de base, de sorte que la représentation structurelle de chaque version comporte une chaîne desdits identifiants de type.

11. Procédé de communication selon la revendication 10, dans lequel chaque identifiant de type est un caractère distinct.

12. Procédé de communication selon la revendication 11, dans lequel la structure globale d'au moins un message comprend au moins une structure de données imbriquées.

13. Procédé de communication selon la revendication 12, dans lequel l'ensemble fini de types de base comprend au moins un type de base destiné à délimiter la structure de données imbriquées.

14. Equipement comportant une entité logicielle agencée pour communiquer via une interface de programmation applicative, qui comporte au moins une transaction, l'entité logicielle comprenant une table de versions produite par la mise en œuvre des étapes de la phase de configuration du procédé de communication selon l'une des revendications précédentes, l'entité logicielle étant en outre agencée pour mettre en œuvre la phase d'émission et/ou la phase de réception du procédé de communication selon l'une des revendications précédentes.

15. Programme d'ordinateur comprenant des instructions qui conduisent l'équipement selon la revendication 14 à exécuter la phase de configuration, ainsi que la phase d'émission et/ou la phase de réception du procédé de communication selon l'une des revendications 1 à 13.

16. Support d'enregistrement lisible par ordinateur, sur lequel est enregistré le programme d'ordinateur selon la revendication 15.

## Patentansprüche

1. Kommunikationsverfahren zwischen Softwareeinheiten über eine Schnittstelle zur Programmierung von Anwendungen, die zumindest eine jeweils durch einen Satz von Nachrichten definierte Transaktion (12) enthält, wobei das Kommunikationsverfahren eine Konfigurationsphase umfasst, welche die folgenden Schritte enthält, die in jeder Softwareeinheit und für jede Version der von der Softwareeinheit implementierten Transaktion ausgeführt werden und die darin bestehen dass:
- eine Strukturbeschreibung (14) der Version erstellt wird, die eine Gesamtstruktur jeder Nachricht enthält, die in der Version der Transaktion ausgetauscht werden kann;
- eine Signatur (13) erzeugt wird, welche die Strukturbeschreibung der Version repräsentiert;
- ein Objekt (11) definiert und gespeichert wird, welches die Signatur (13) und die Strukturbeschreibung (14) der Version enthält;
wobei das Kommunikationsverfahren ferner eine Sendephase umfasst, welche den Schritt enthält, dass:
- eine sendende Softwareeinheit (E) dazu veranlasst wird, eine aktuelle Nachricht einer aktuellen Version der Transaktion sowie eine aktuelle Signatur der aktuellen Version zu senden;
und eine Empfangsphase umfasst, welche die Schritte enthält, dass:
- eine empfangende Softwareeinheit (R) dazu veranlasst wird, die aktuelle Nachricht und die aktuelle Signatur zu empfangen;
- die empfangende Softwareeinheit dazu veranlasst wird, ein Objekt mit einer Signatur, die mit der aktuellen Signatur identisch ist, zu identifizieren und die aktuelle Nachricht unter Verwendung der Strukturbeschreibung des Objekts zu decodieren.

2. Kommunikationsverfahren nach Anspruch 1, wobei während der Konfigurationsphase die Signatur dadurch erhalten wird, dass auf die Strukturbeschreibung der Version eine Hashfunktion angewendet wird, die für alle Versionen der Transaktion identisch ist.

3. Kommunikationsverfahren nach Anspruch 1, wobei die aktuelle Signatur als Bestandteil der aktuellen Nachricht an die empfangende Softwareeinheit weitergeleitet wird.

4. Kommunikationsverfahren nach Anspruch 1, wobei während der Konfigurationsphase jede Softwareeinheit die Objekte in einer Versionstabelle (10) speichert.

5. Kommunikationsverfahren nach Anspruch 4, wobei während der Konfigurationsphase die sendende Softwareeinheit (E) und die empfangende Softwareeinheit (R) ihre jeweilige Versionstabelle (10) austauschen, sodass die sendende Softwareeinheit die von der empfangender Softwareeinheit implementierten Transaktionsversionen kennt und verwendet.

6. Kommunikationsverfahren nach Anspruch 4, wobei die Versionstabelle (10) der sendenden Softwareeinheit zumindest eine Privilegkennung enthält, welche eine privilegierte Version (17) der Transaktion identifiziert, die einer ersten empfangenden Softwareeinheit (18) zugeordnet ist und die von der sendenden Softwareeinheit vorrangig verwendet wird, wenn die sendende Softwareeinheit mit der ersten empfangenden Softwareeinheit kommuniziert.

7. Kommunikationsverfahren nach Anspruch 6, wobei die Versionstabelle der sendenden Softwareeinheit zumindest eine Standardkennung enthält, welche eine Standardversion (19) der Transaktion identifiziert, die von der sendenden Softwareeinheit vorrangig verwendet wird, wenn die sendende Softwareeinheit mit einer zweiten empfangenden Softwareeinheit kommuniziert, die in der Versionstabelle der sendenden Softwareeinheit nicht einer privilegierten Version zugeordnet ist.

8. Kommunikationsverfahren nach einem der vorhergehenden Ansprüche, wobei jedes Objekt (11), neben der Signatur und der Strukturbeschreibung der Version, die dem Objekt zugeordnet sind, einen Präferenzindikator (15) umfasst, der es erlaubt, mehrere Versionen auszuwerten und miteinander zu vergleichen, um eine optimierte Version zu wählen, die es ermöglicht, Leistungsmerkmale der Kommunikation zu optimieren.

9. Kommunikationsverfahren nach Anspruch 2, wobei die Konfigurationsphase einen Schritt umfasst, bei dem die Hashfunktion zwischen den Softwareeinheiten ausgehandelt wird.

10. Kommunikationsverfahren nach einem der vorhergehenden Ansprüche, wobei die Konfigurationsphase den Schritt umfasst, dass eine endliche Menge von Grundtypen definiert wird, welche dazu dienen, die Grundstrukturen der Nachrichten zu definieren, und dass jedem Grundtyp eine Typenkennung zugeordnet wird, sodass die Strukturdarstellung jeder Version eine Kette dieser Typenkennungen enthält.

11. Kommunikationsverfahren nach Anspruch 10, wobei es sich bei jeder Typenkennung um ein distinktes Zeichen handelt.

12. Kommunikationsverfahren nach Anspruch 11, wobei die Grundstruktur zumindest einer Nachricht zumindest eine Struktur von verschachtelten Daten umfasst.

13. Kommunikationsverfahren nach Anspruch 12, wobei die endliche Menge von Grundtypen zumindest einen Grundtyp zum Begrenzen der Struktur von verschachtelten Daten umfasst.

14. Gerät mit einer Softwareeinheit, die so eingerichtet ist, dass sie über eine Schnittstelle zur Programmierung von Anwendungen kommuniziert, die zumindest eine Transaktion enthält, wobei die Softwareeinheit eine Versionstabelle umfasst, die durch die Ausführung der Schritte der Konfigurationsphase des Kommunikationsverfahrens nach einem der vorhergehenden Ansprüche erstellt wird, wobei die Softwareeinheit ferner so eingerichtet ist, dass sie die Sendephase und/oder die Empfangsphase des Kommunikationsverfahrens nach einem der vorhergehenden Ansprüche ausführt.

15. Computerprogramm, das Befehle umfasst, welche das Gerät nach Anspruch 14 dazu veranlassen, die Konfigurationsphase sowie die Sendephase und/oder die Empfangsphase des Kommunikationsverfahrens nach einem der Ansprüche 1 bis 13 auszuführen.

16. Computerlesbares Speichermedium, auf welchem das Computerprogramm nach Anspruch 15 abgespeichert ist.

## Claims

1. A communication method for communication between software entities via an application programming interface that comprises at least one transaction (12), each transaction being defined by a set of messages, the communication method including a configuration stage comprising the following steps that are performed in each software entity and for each version of the transaction that is implemented by said software entity:
producing a structure description (14) of the version, which structure description includes an global structure for each message that can be exchanged in that version of the transaction;
producing a signature (13) that is representative of the structure description of the version of the transaction;
defining and saving an object (11) comprising the signature (13) and the structure description (14) of the version;
the communication method further comprising a sending stage comprising the step of:
causing a sender software entity (E) to send a current message in a current version of the transaction, together with a current signature of the current version; and a reception stage comprising the steps of:
causing a receiver software entity (R) to receive the current message and the current signature;
causing the receiver software entity to identify an object having a signature identical to the current signature, and to decode the current message by using the structure description of said object.

2. The communication method according to claim 1, wherein, during the configuration stage, the signature is obtained by performing a hashing function on the structure description of the version, which hashing function is identical for all of the versions of the transaction.

3. The communication method according to claim 1, wherein the current signature is transmitted to the receiver software entity by being included in the current message.

4. The communication method according to claim 1, wherein, during the configuration stage, each software entity stores the objects in a versions table (10).

5. The communication method according to claim 4, wherein, during the configuration stage, the sender software entity (E) and the receiver software entity (R) exchange their respective versions tables (10) so that the sender software entity knows the versions of the transaction that are implemented by the receiver software entity, and uses those versions.

6. The communication method according to claim 4, wherein the versions table (10) of the sender software entity includes, in association with a first receiver software entity, at least one priority identifier that identifies a priority version (17) of the transaction, the sender software entity using the priority version as a priority when communicating with the first receiver software entity.

7. The communication method according to claim 6, wherein the versions table of the sender software entity includes at least one default identifier that identifies a default version (19) of the transaction for use by the sender software entity as a priority when the sender software entity is communicating with a second receiver software entity that is not associated with a priority version in the versions table of the sender software entity.

8. The communication method according to any one of the preceding claims, wherein each object (11) comprises, in addition to the signature and the structure description of the version associated with said object, a preference indicator (15) serving to evaluate a plurality of versions and to compare them with one another in order to select an optimum version for optimizing the performance of the communication.

9. The communication method according to claim 2, wherein the configuration stage includes a step during which the hashing function is negotiated between the software entities.

10. The communication method according to any one of the preceding claims, wherein the configuration stage includes the step of defining a finite set of basic types for defining the global structures of messages and of associating a type identifier with each basic type, whereby the structure representation of each version comprises a string of said type identifiers.

11. The communication method according to claim 10, wherein each type identifier is a distinct character.

12. The communication method according to claim 11, wherein the global structure of at least one message may also comprise at least one nested data structure.

13. The communication method according to claim 12, wherein the finite set of basic types includes at least one basic type for delimiting the nested data structure.

14. Equipment including a software entity arranged to communicate via an application programming interface that comprises at least one transaction, the software entity including a versions table produced by performing the steps of the configuration stage of the communication method according to any one of the preceding claims, the software entity also being arranged to perform the sending stage and/or the reception stage of the communication method according to any one of the preceding claims.

15. A computer program including instructions for causing the equipment according to claim 14 to execute the configuration stage and also the sending stage and/or the reception stage of the communication method according to any one of the claims 1 to 13.

16. A computer-readable storage medium storing the computer program according to claim 15.
